# EUROPEAN PATENT SPECIFICATION

(11) **EP 3 684 076 B1**
(45) Date of publication and mention of the grant of the patent: **09.08.2023**
(21) Application number: 20159525.3
(22) Date of filing: 26.02.2020
(51) Int. Cl.: H04R 1/10, H04R 25/00, H04S 7/00

(54) **ACCELEROMETER-BASED SELECTION OF AN AUDIO SOURCE FOR A HEARING DEVICE**
BESCHLEUNIGUNGSMESSERBASIERTE AUSWAHL EINER AUDIOQUELLE FÜR EIN HÖRGERÄT
SÉLECTION D'UNE SOURCE AUDIO POUR UN DISPOSITIF AUDITIF BASÉE SUR UN ACCÉLÉROMÈTRE

(30) Priority: 29.03.2019 US 201916370536
(43) Date of publication of application: 22.07.2020
(73) Proprietor: Sonova AG, 8712 Stäfa (CH)
(72) Inventor: EL GUINDI, Nadim, 8049 Zürich (CH); STUMPF, Nina, 8708 Männedorf (CH); SPIELER, Ivo, 8712 Stäfa (CH); SIGWANZ, Ullrich, 8634 Hombrechtigkon (CH)

(56) References cited:
- EP-A1- 2 908 549
- EP-A1- 3 373 603
- WO-A2-98/54928
- US-A1- 2011 091 056
- US-A1- 2013 223 660

## Description

### BACKGROUND INFORMATION

A hearing device may be configured to selectively provide audio content from various sources to a user wearing the hearing device. For example, a hearing device may be configured to operate in a first audio rendering mode in which the hearing device renders or provides ambient audio content detected by a microphone to a user (e.g., by providing an amplified version of the ambient audio content to the user). The hearing device may alternatively operate in a second audio rendering mode in which the hearing device connects to a remote audio source (e.g., a phone, a remote microphone system, or other suitable device) and provides remote audio content output by the remote audio source to the user.

In some scenarios, it may be desirable for a hearing device to dynamically and intelligently switch between the first and second audio rendering modes described above. For example, while a user of a hearing device is listening to remote audio content (e.g., music) provided by a media player device to which the hearing device is connected, a person may approach the user and begin talking to the user. In this example, it may be desirable for the hearing device to dynamically and intelligently switch from operating in the second audio rendering mode to operating in the first audio rendering mode so that the user may hear the words spoken by the person. Heretofore, to do this, the user has had to manually provide input (e.g., by pressing a button on the hearing device or on the media player device) representative of a command for the hearing device to switch to the second audio rendering mode. Such manual interaction is cumbersome and time consuming, which may result in an embarrassing situation for the user and/or the user not hearing some of the words spoken by the person.

US 2011/0091056 A1 discloses a hearing device comprising a microphone, an angular velocity sensor, and an external input terminal which can be connected to an external audio source such as a television (TV). A correlation between an input signal of the microphone and an input signal of the external input terminal can be determined by an environmental sound detector. A deviation of a direction of the user's head, as detected by the angular velocity sensor, relative to a reference direction can be determined by a facial movement detector. A mix ratio between the input signals of the microphone and the external input terminal which is outputted by the hearing device can be determined by a mix ratio determination unit. The mix ratio depends on the correlation between the input signals of the microphone and the external input terminal, and the deviation of the direction of the user's head relative to the reference direction.

WO 98/54928 A2 discloses a hearing device comprising an ambient signal transducer and a signal processor configured to process the ambient signal according to one of at least two sets of response parameters. The applied response parameters can be selected by a switch including a head movement sensor. In this way, a user can control the response parameter selection for the ambient signal processing by specific head movements.

EP 3 373 603 A1 discloses a hearing device comprising a wireless receiver for receiving a direct representation of an audio signal from an audio signal source, such as a TV, located at a null direction corresponding to a look direction of a user, and a multitude of microphones for acoustically receiving a sound around the hearing device representing a mixture of the audio signal coming from the null direction and possibly other acoustic signals coming from other directions. The hearing device further comprises a beamformer providing a spatial filtering to cancel or attenuate the audio signal component propagated in the null direction from the other audio signal components coming from the other directions in the sound detected by the microphones. By removing the audio signal propagated in the null direction from the audio signal detected by the microphones, a quality of the outputted sound based on the wirelessly received audio signal and the audio signal detected by the microphones, can be improved. A beamformer signal may include information about a direction of a sound source of interest, and an accelerometer signal may be employed to estimate the look direction of the user.

US 2013/0223660 A1 discloses a hearing device comprising microphones for receiving ambient sound, an accelerometer for detecting movements of a user, and a processing unit for processing the received ambient sound based on the user's movements. A mode detection unit can identify a particular mode for the signal processing depending on the user's movement and outputs from a signal classifier applied on the received ambient sound. In this way, an audio output can be generated in which ambient sound signals interesting for the user are increasingly included or in which ambient sound signals uninteresting for the user are reduced, for instance by adjusting a signal-to-noise-ratio.

### BRIEF DESCRIPTION OF THE DRAWINGS

The accompanying drawings illustrate various embodiments and are a part of the specification. The illustrated embodiments are merely examples and do not limit the scope of the disclosure. Throughout the drawings, identical or similar reference numbers designate identical or similar elements.
FIG. 1 shows an exemplary configuration in which a hearing device is configured to communicate with a remote audio source according to principles described herein.
FIG. 2-3 illustrate exemplary configurations in which a hearing device is configured to select an audio source according to principles described herein.
FIG. 4 illustrates an exemplary configuration in which binaural hearing system is configured to communicate with a remote audio source according to principles described herein.
FIG. 5 illustrates exemplary signals received from accelerometers of a binaural hearing system according to principles described herein.
FIGS. 6-7 illustrate various signal processing operations that may be performed by a hearing device according to principles described herein.
FIG. 8 illustrates an exemplary method according to principles described herein.

### DETAILED DESCRIPTION

Accelerometer-based selection of an audio source for a hearing device is described herein.

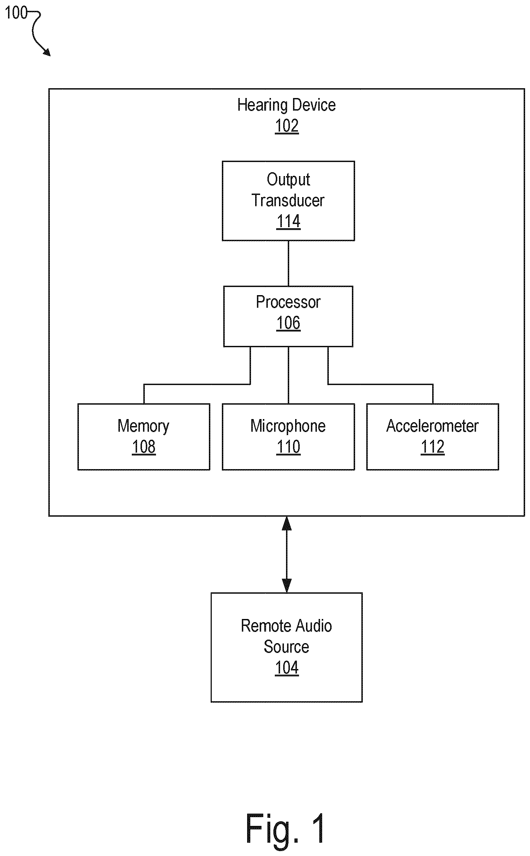

FIG. 1 shows an exemplary configuration 100 in which a hearing device 102 is configured to selectively communicate with a remote audio source 104. Hearing device 102 may be implemented by any type of device configured to provide or enhance hearing to a user. For example, hearing device 102 may be implemented by a hearing aid configured to provide an audible signal (e.g., amplified audio content) to a user, a sound processor included in a cochlear implant system configured to apply electrical stimulation representative of audio content to a user, a sound processor included in a system configured to apply both acoustic and electrical stimulation to a user, or any other suitable hearing prosthesis. As shown, hearing device 102 includes a processor 106 communicatively coupled to a memory 108, a microphone 110, an accelerometer 112, and an output transducer 114. Hearing device 102 may include additional or alternative components as may serve a particular implementation.

Microphone 110 may be implemented by any suitable audio detection device and is configured to detect audio content ambient to a user of hearing device 102. The ambient audio content may include, for example, audio content (e.g., music, speech, noise, etc.) generated by one or more audio sources included in an environment of the user. Microphone 110 may be included in or communicatively coupled to hearing device 102 in any suitable manner.

Accelerometer 112 may be implemented by any suitable sensor configured to detect movement (e.g., acceleration) of hearing device 102, for instance an inertial sensor, such as a gyroscope. While hearing device 102 is being worn by a user, the detected movement of hearing device 102 is representative of movement by the user.

Output transducer 114 may be implemented by any suitable audio output device, for instance a loudspeaker of a hearing device or an output electrode of a cochlear implant system.

Memory 108 may be implemented by any suitable type of storage medium and may be configured to maintain (e.g., store) data generated, accessed, or otherwise used by processor 106. For example, memory 108 may maintain data representative of a plurality of audio rendering modes that specify how processor 106 processes (e.g., selects, combines, etc.) different types of audio content from different audio sources (e.g., ambient audio content detected by microphone 110 and remote audio content provided by remote audio source 104) to present the audio content to a user.

Processor 106 may be configured to perform various processing operations with respect to selecting audio sources to provide audio content to a user. For example, processor 106 may be configured to selectively receive ambient audio content detected by microphone 106, as well as remote audio content from remote audio source 104. Processor 106 may be configured to operate in various audio rendering modes that select and/or combine the ambient audio content and the remote audio content in various combinations to generate an audio signal to provide to the user, as described in more detail herein.

Processor 106 may be further configured to access accelerometer data generated by accelerometer 112. Processor 106 may use the accelerometer data to select an audio rendering mode in which to operate. For example, processor 106 may determine a movement of the user based on the accelerometer data. Processor 106 may determine whether the movement of the user indicates whether the user intends for the hearing device to continue operating in a first audio rendering mode or to switch to a second audio rendering mode. Example implementations and other operations that may be performed by processor 106 are described in more detail herein. In the description that follows, any references to operations performed by hearing device 102 may be understood to be performed by processor 106 of hearing device 102.

Remote audio source 104 may include any suitable device or system that provides audio content and is configured to communicate with hearing device 102. For example, remote audio source 104 may include a mobile device, a television, a computer, an internet server providing streaming music, an audio speaker, a remote microphone or any other such device that can provide an audio signal to hearing device 102. Remote audio content may include content received from remote audio source 104 at any time (e.g., streaming audio content and/or audio content downloaded to hearing device 102). Hearing device 102 may communicate with remote audio source 104 in any suitable manner, such as through a wireless interface (e.g., a Bluetooth interface) on each of hearing device 102 and remote audio source 104 and/or a wired interface. Hearing device 102 may be configured to selectively connect to remote audio source 104 and may also be configured to provide information (e.g., protocol information to connect to remote audio source 104, commands for controlling a providing of remote audio content such as playback, volume control, etc.) to remote audio source 104.

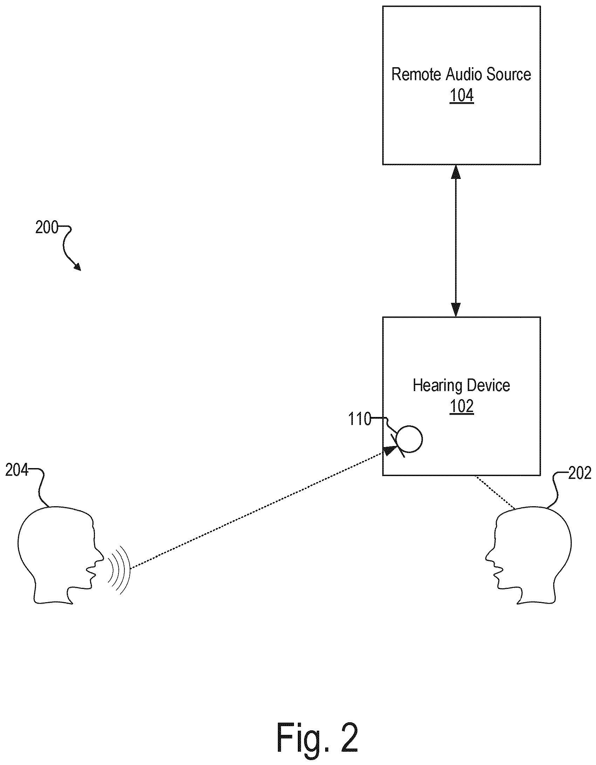

FIG. 2 illustrates an exemplary configuration 200 in which hearing device 102 is configured to select an audio source based on accelerometer data. As shown, hearing device 102 is worn by a user 202 to enable or enhance hearing by user 202. Hearing device 102 is configured to connect to remote audio source 104, receive remote audio content from remote audio source 104, and provide the remote audio content to user 202. Hearing device 102 is also configured to provide ambient audio content detected by microphone 110 to user 202.

Hearing device 102 may operate in various audio rendering modes that provide user 202 with audio signals based on different combinations (e.g., weighted combinations) of the ambient audio content and the remote audio content based on movement of user 202. For example, hearing device 102 may be connected to remote audio source 104 and operating in a first audio rendering mode that provides a first audio signal. The first audio signal may be based more on the remote audio content than ambient audio content. Because the first audio signal is based less on the ambient audio content, user 202 may not easily hear the ambient audio content while hearing device 102 is operating in the first audio rendering mode (or not be able to hear the ambient audio at all if the first audio signal is based solely on the remote audio content). As such, user 202 may not easily or at all be able to hear speaker 204, though speaker 204 may be speaking to user 202. A conventional hearing device may be configured to receive a manual input from user 202 (and/or an input from remote audio source 104 resulting from a manual input by user 202 such as pausing or disconnecting remote audio source 104) to switch an audio rendering mode so that user 202 may be able to hear speech content provided by speaker 204. In contrast, hearing device 102 may dynamically and automatically determine whether to switch audio rendering modes based on accelerometer data, such as from accelerometer 112.

For example, hearing device 102 may detect (e.g., using microphone 110) that speaker 204 is speaking to user 202. User 202 may notice speaker 204, such as by seeing and recognizing speaker 204 and/or observing that speaker 204 is speaking to user 202. Additionally or alternatively, the first audio rendering mode may include some ambient audio content and user 202 may hear speaker 204 speaking to user 202. In response, user 202 may turn his/her head toward speaker 204 to focus his/her attention toward speaker 204 to listen to speaker 204 and/or verify that speaker 204 is speaking to user 202. Hearing device 102 may correlate the movement of user 202 (e.g., turning his/her head toward speaker 204) with a direction a source of the speech content (speaker 204) detected by microphone 110. If the direction of the source of the speech content correlates with the movement of user 202, hearing device 102 may determine that user 202 intends to switch audio rendering modes so that user 202 may hear the ambient audio source more than the remote audio source. Based on this determination, hearing device 102 may automatically (e.g., without user intervention and/or providing a request for confirmation) switch audio rendering modes. While configuration 200 shows speaker 204 providing speech content, accelerometer-based selection of the audio source may be implemented on any suitable specific content detected in the ambient audio content. For example, specific content may include speech content, moving noises, animal sounds, siren sounds, and any other such audio content distinguishable from a remainder of the ambient audio content. Example implementations for correlating the direction of the source of specific speech content with the movement of user 202 are described further herein.

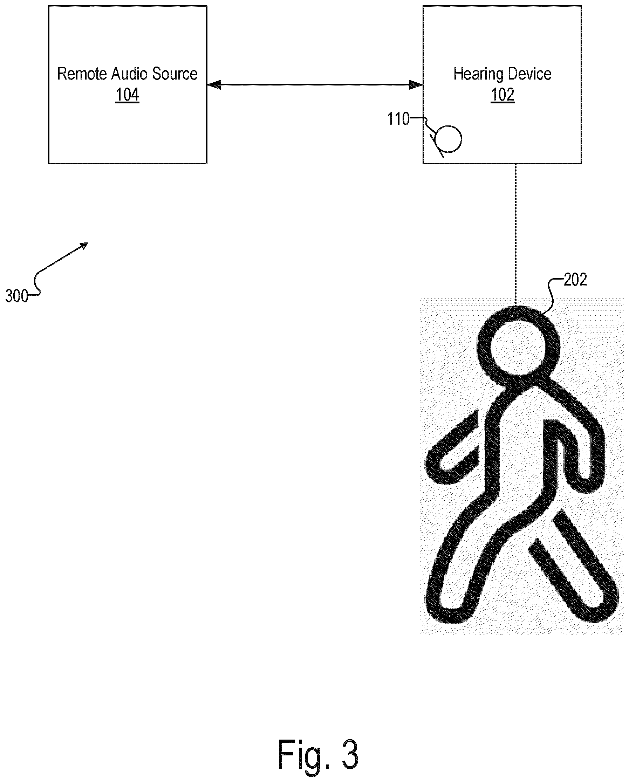

FIG. 3 illustrates another exemplary configuration 300 in which a hearing device is configured to select an audio source based on accelerometer data. Similar to FIG. 2, hearing device 102 is worn by user 202 and configured to connect to remote audio source 104. In this example configuration 300, hearing device 102 may determine whether to switch audio rendering modes based on a walking state of user 202. For example, if accelerometer data for user 202 indicates that user 202 is taking steps (e.g., walking, running, jogging, etc.), hearing device 102 may determine that user 202 intends to receive ambient audio content detected by microphone 110 rather that remote audio content provided by remote audio source 104.

For instance, remote audio source 104 may be a television or computer configured to provide audio content to hearing device 102 so that user 202 may hear audio content associated with video content provided by the television or computer. Hearing device 102 may be configured to automatically connect to remote audio source 104 based on a proximity to remote audio source 104. For example, if remote audio source 104 is a television that is on and user 202 is within a threshold distance away from the television, hearing device 102 may be configured to automatically connect to the television and provide an audio signal based on the remote audio content to user 202. However, in some instances, user 202 may be within the threshold distance but not intending to listen or watch the television. For example, someone else may be watching the television while user 202 cleans a floor near the television or mows a lawn right outside but within the threshold distance of the television. In such a case, user 202 may not want hearing device 102 to repeatedly connect and disconnect to remote audio source 104 (which would happen if user 202 keeps going in and outside of the threshold distance while cleaning the floor and/or mowing the lawn). As hearing device 102 may determine that the movement of user 202 to be in a walking state based on accelerometer data, hearing device 102 may abstain from switching audio rendering modes, even though other criteria to provide remote audio content may be met.

As another example, remote audio source 104 may be a remote microphone system, such as if user 202 is a student in a classroom setting. In such a setting, a teacher may speak into a remote microphone that may connect to hearing device 102 and provide remote audio content. However, if the student is outside the classroom but the teacher leaves the remote microphone on, hearing device 102 may continue to provide remote audio content to user 202. In such a case, if hearing device 102 determines that user 202 is taking steps, hearing device 102 may determine that user 202 intends to receive ambient audio content rather that the remote audio content. Hearing device 102 may then remain in (e.g., abstain from switching from) an audio rendering mode that is based more on the ambient audio content than the remote audio content if hearing device 102 is already in that audio rendering mode. Otherwise, if the hearing device 102 is operating in an audio rendering mode that is based more on the remote audio content, hearing device 102 may switch to a different audio rendering mode that is based more on the ambient audio content based on determining that user 202 is taking steps.

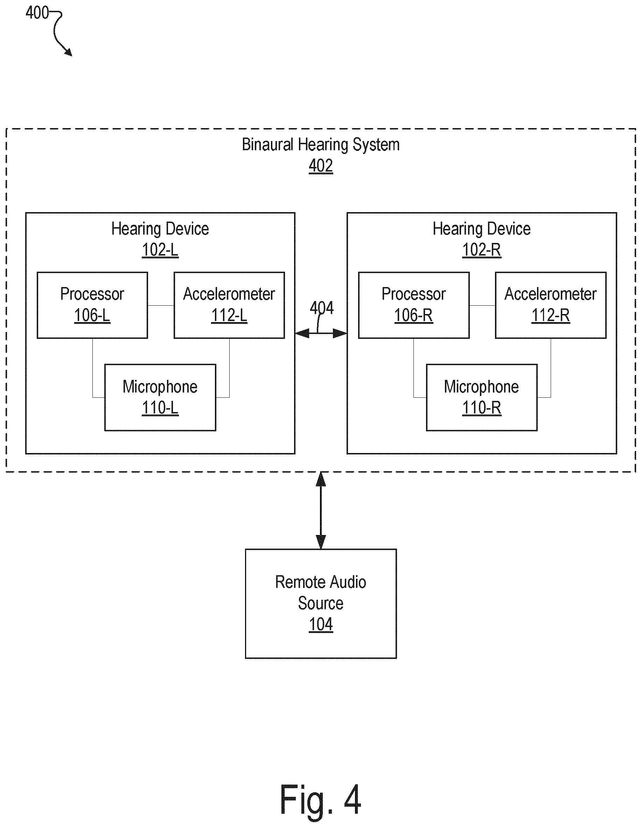

FIG. 4 illustrates an exemplary configuration 400 in which a binaural hearing system 402 is configured to select audio sources base on accelerometer data. As shown, binaural hearing system 402 includes a left hearing device 102-L and a right hearing device 102-R (collectively "hearing devices 102"). Each of hearing devices 102 may be implemented as described above in FIGS. 1-3. Alternatively, binaural hearing system 402 may include asymmetric left and right hearing devices. For example, one or more of the components such as the accelerometer, microphone, etc. may each be included in only one or the other of hearing devices 102. The hearing device with the component may communicate with the other hearing device (as indicated by arrow 404) to provide audio content, information specifying audio render modes, etc.

Binaural hearing system 402 is configured to selectively connect to remote audio source 104. Either or both of hearing devices 102 may connect to remote audio source 104 to receive remote audio content. Hearing devices 102 may include wired and/or wireless interfaces to connect and communicate with remote audio source 104 and with each other.

As shown, hearing devices 102 each include a microphone 110 (e.g., microphone 110-L or microphone 110-R), which may enable binaural hearing system 402 to accurately determine a direction of a source of speech or other ambient audio content. For example, by analyzing various features and differences in the features in the audio signal received by each hearing device 102, binaural hearing system 402 may determine the direction of the source of the speech content. Example features may include a signal-to-noise ratio (SNR), levels (e.g., volumes), onset, time differences in receiving the audio signal, etc. Example analyses may include estimating the binaural SNR differences, estimating a modulation depth or dynamics, percentile analysis, comparing speech modulations with cardioid patterns (e.g., for determining front or back directions), etc. Binaural hearing system 402 may also use such techniques as well as other speech recognition algorithms to determine that the ambient audio content includes speech content. Additionally or alternatively, each hearing device 102 may include additional microphones which may also provide more information for determining direction of audio sources. For example, a plurality of microphones in hearing device 102 may allow hearing device 102 to use beam forming, as well as providing additional data points for analysis using the example techniques described.

As shown, hearing devices 102 also each include an accelerometer 112 (e.g., accelerometer 112-L or accelerometer 112-R), which may enable binaural hearing system 402 to accurately determine a movement of a user. For example, by analyzing a slope, value, sign, etc. of accelerometer data received from both accelerometer 112-L and 112-R, binaural hearing system 402 may determine which direction a user turns his/her head. Binaural hearing system 402 may then compare and correlate the direction of the user's head movement with the direction of the source of the ambient audio content to determine whether or which audio rendering mode to operate in.

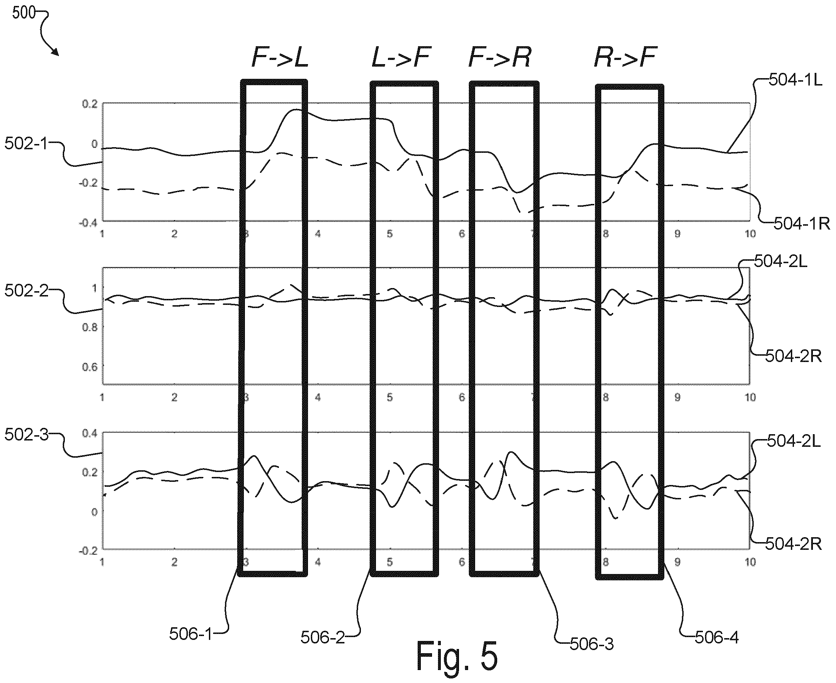

For example, FIG. 5 shows exemplary accelerometer data 500 received from accelerometers 112 of binaural hearing system 402. Accelerometer data 500 shows three graphs 502-1, 502-2, 502-3 showing accelerometer signals for each of x-, y-, and z-coordinate axes, respectively. Each of graphs 502 show two signals, 504-L and 504-R corresponding to data from accelerometer 112-L and 112-R. For example, graph 502-1 shows x-axis accelerometer signal 504-1L output by accelerometer 112-L and x-axis accelerometer signal 504-1R output by accelerometer 112-R, graph 502-2 shows y-axis accelerometer signal 504-2L output by accelerometer 112-L and y-axis accelerometer signal 504-2R output by accelerometer 112-R, and graph 502-3 shows z-axis accelerometer signal 504-3L output by accelerometer 112-L and z-axis accelerometer signal 504-3R output by accelerometer 112-R.

Vertically boxed portions 506 of graphs 502 correspond to different types of head movements. Vertically boxed portion 506-1 shows example signals 504 corresponding to a head turn from a front-facing direction to a left-facing direction. Vertically boxed portion 506-2 shows example signals 504 corresponding to a head turn from a left-facing direction to a front-facing direction. Vertically boxed portion 506-3 shows example signals 504 corresponding to a head turn from a front-facing direction to a right-facing direction. Vertically boxed portion 506-4 shows example signals 504 corresponding to a head turn from a right-facing direction to a front-facing direction. Similar analyses may be used to determine varying degrees of head turns, including a back-facing direction, as well as a downward-facing direction to a front-facing direction (e.g., if a user is looking down at a phone and raises his/her head to look at someone speaking to him/her).

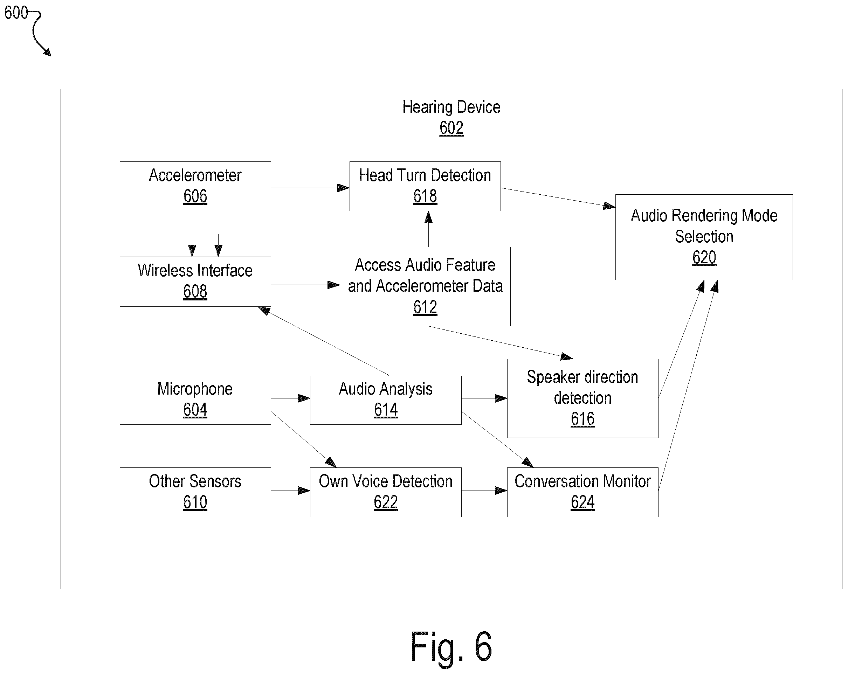

FIG. 6 illustrates exemplary signal processing operations 600 that may be performed by a hearing device 602 to select audio sources using accelerometer data. Hearing device 602 is similar to the other hearing devices described herein. As shown, hearing device 602 includes a microphone 604, an accelerometer 606, as well as a wireless interface 608 and other sensors 610. Other sensors 610 may include sensors such as canal microphones, bone conduction sensors, etc. Other sensors 610 may provide a variety of types of information to hearing device 602, details of which will be further described below. As also shown, hearing device 602 is configured to implement an access module 612, an audio analysis module 614, a speaker direction detection module 616, a head turn detection module 618, an audio rendering mode selection module 620 ("selection module 620"), an own voice detection module 622, and a conversation monitor module 624, each of which may be implemented by processor-readable instructions configured to be executed by a processor of hearing device 602.

Wireless interface 608 may provide for communication with another hearing device, such as in a binaural hearing system, as well as with a remote audio source. Access module 612 accesses SNR data (and/or other such feature data) of audio content detected by the other hearing device via wireless interface 608. Access module 612 also accesses accelerometer data and/or features of accelerometer data from the other hearing device via wireless interface 608.

Audio analysis module 614 is configured to analyze audio content detected by hearing device 602. For example, audio analysis module 614 may determine the SNR of the audio content, as described herein. Hearing device 602 provides data from such analyses to the other hearing device via wireless interface 608.

Based on the analysis of the audio signal detected by hearing device 602 and the analysis of the audio signal detected by the other hearing device (e.g., as accessed by access module 612), speaker direction detection module 616 may detect a direction of a speaker. Any suitable algorithms and analyses may be used to detect the direction of the speaker, as described herein.

Head turn detection module 618 is configured to determine a movement of the user, such as a turning of a head of the user and/or a walking state of the user. To this end, head turn detection module 618 receives accelerometer data of hearing device 602 from accelerometer 606 as well as accelerometer data of the other hearing device (e.g., as accessed by access module 612). Based on the analysis of the accelerometer data of hearing device 602 and the accelerometer data of the other hearing device, head turn detection module 618 may determine a direction of a user's head turn.

Selection module 620 is configured to select an audio rendering mode for hearing device 602. For example, selection module 620 receives information from modules 616 and 618 to compare and/or correlate a direction of a speaker and a direction of a user's head turn. If the correlation is positive (e.g., within a predetermined range), selection module 620 may instruct hearing device 602 to operate in an audio rendering mode that is based more on ambient audio content than remote audio content. If the correlation is negative or neutral (e.g., outside the predetermined range), selection module 620 may instruct hearing device 602 to operate in an audio rendering mode that is based more on the remote audio content than the ambient audio content.

Selection module 620 may also allow for a period of time in which to correlate the user's movement and the direction of the speaker. For example, the user may notice the speaker before the speaker starts speaking, and move his/her head in the speaker's direction before hearing device 602 receives any ambient audio content from the speaker's direction. Conversely, user may not notice the speaker until after the speaker starts speaking, in which case the movement of the speaker that correlates with the direction of the speaker may be detected after the detection of the direction of the speaker. But in both instances, the correlation may be considered positive. As another example of a movement of a user, the user may turn his/her head toward the speaker initially, and then turn back (e.g., toward a mobile device or an initial direction the user was facing) upon realizing the speaker was not speaking to the user or the user has no intention of listening. In such a case, the period of time used in correlating the user's movement may allow for ultimately determining that the user's movement does not correlate with the direction of the speaker and thus hearing device 602 should not switch audio rendering modes.

In some examples, selection module 620 may determine that the user's movement correlates with the speaker's direction and instruct hearing device 602 to operate in an audio rendering mode that is based entirely on ambient audio content. Additionally, selection module 620 may provide a command to the remote audio source via wireless interface 604 to pause the providing of the remote audio content. Selection module 620 may also determine that the user intends to switch back to listening to the remote audio content and provide a command to the remote audio source to resume the providing of the remote audio content. Selection module 620 may detect such an intention in various ways. For example, selection module 620 may detect a movement of the user away from the direction of the speaker or back to an initial direction the user was facing, or toward a direction of the remote audio source. Additionally or alternatively, other sensors 610 of hearing device 602 may provide information to determine that the user is also speaking and thus having a conversation with the speaker.

Own voice detection module 622 is configured to detect whether the user of hearing device 602 is speaking. In some examples, own voice detection module 622 may use information from microphone 604 and/or other sensors 610. For example, a bone conduction sensor may detect vibrations in the user's head caused when the user speaks. Microphone 604 may also provide an indication that the user's own voice is being detected, based on direction, levels, SNR estimation, voice recognition techniques, etc. Based on a determination from own voice detection module 622, conversation monitor module 624 may monitor the conversation between the user and the speaker. While the conversation is taking place, conversation monitor module 624 may provide to selection module 620 an indication that the user remains intending to listen to ambient audio content and selection module 620 may instruct hearing device 602 to remain in a corresponding audio rendering mode. Once conversation monitor module 624 detects no conversation for a certain amount of time, conversation monitor module 624 may indicate as such to selection module 620, which may instruct hearing device 602 to switch back to an audio rendering mode that is based more on the remote audio content. As mentioned, such an instruction may be accompanied by a command to the remote audio source to resume the providing of the remote audio content.

In some examples, hearing device 602 may disconnect from the remote audio source upon determining that hearing device 602 will operate in an audio rendering mode that is based entirely on ambient audio content. In such examples, hearing device 602 may automatically reconnect to the remote audio source based on determining a user's intention to resume listening to remote audio content.

In some instances, a binaural hearing system (e.g., which may include two of hearing device 602), may switch audio rendering modes asymmetrically between the two hearing devices. For example, if the binaural hearing system determines that a direction of a speaker is on the right side, the binaural hearing system may switch the audio rendering mode of the right hearing device while keeping the audio rendering mode of the left hearing device the same. Alternatively, the binaural hearing system may switch the audio rendering modes of the right and left hearing devices to different audio rendering modes. For instance, if the binaural hearing system determines that the direction of the speaker is on the right side, the binaural hearing system may switch the audio rendering mode of the right hearing device to one based entirely on ambient audio content, while switching the audio rendering mode of the left hearing device to one based more on ambient audio content than remote audio content, but still based in part on remote audio content.

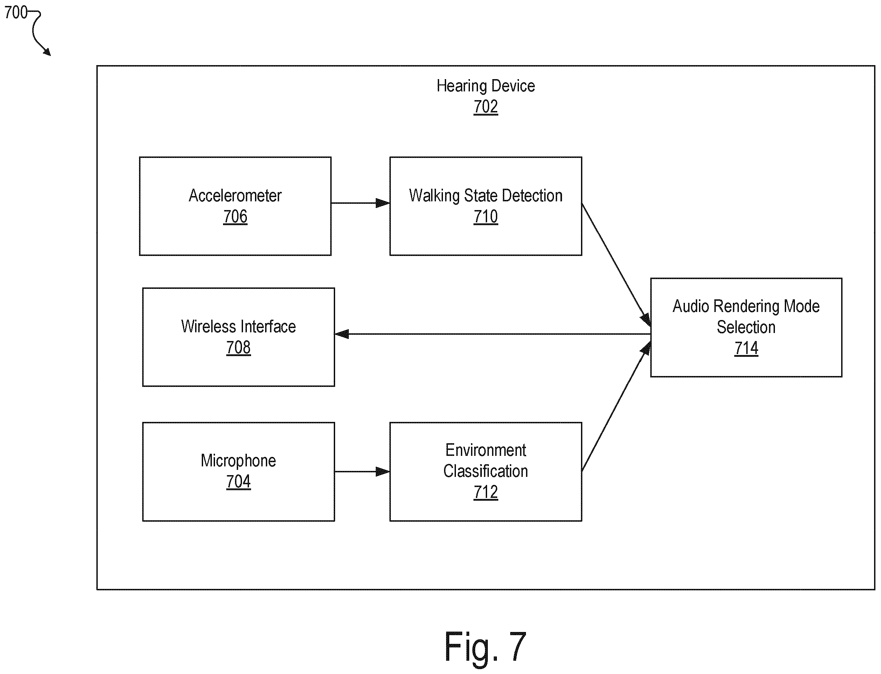

FIG. 7 illustrates exemplary signal processing operations 700 that may be performed by a hearing device 702 to select audio sources using accelerometer data. Hearing device 702 is similar to any of the hearing devices described herein. As shown, hearing device 702 includes a microphone 704, an accelerometer 706, and a wireless interface 708. Hearing device 702 also includes a walking state detection module 710 configured to determine a walking state of the user. Walking state detection module 710 may receive accelerometer data (e.g., from accelerometer 706) to determine whether the user's walking state is one of taking steps (e.g., walking, running, jogging, etc.) or whether the walking state is one of not taking steps (e.g., standing, sitting, lying down, driving, etc.). Walking state detection module 710 may detect that the user is taking steps using any suitable algorithm. For example, walking state detection module 710 may use step modulation frequency detection using y-mean crossings. As another example, walking state detection module 710 may also use machine learning algorithms for activity primitive recognition.

Hearing device 702 also includes a classification module 712 that receives information from microphone 704 to classify an environment of the user. For example, classification module 712 may determine whether the user is situated indoors or outdoors. Classification module 712 may use any suitable algorithms to classify the user's environment. For example, classification module 712 may detect audio cues, such as wind or a lack of reverberation in the audio signal to determine that the user is outdoors.

Hearing device 702 includes a selection module 714 that uses the walking state of the user as well as the environment classification to select an audio rendering mode. For example, hearing device 702 may be configured to provide audio from a remote audio source. However, based on the walking state of the user being one of taking steps combined with the environment of the user being outside, in some instances, selection module 714 may determine that the user intends to remain listening to ambient audio content and direct hearing device 702 not to switch from such an audio rendering mode. Selection module 714 may also take into account various factors, such as duration of the walking state, regularity of steps taken, distance of walking or running to make the selection. For example, in some cases, the user may be jogging outside and may intend to listen to music provided by a mobile device while jogging. In such cases, the regularity and distance of the steps taken by the user may indicate that the user intends to listen to more of the remote audio source than the ambient audio source.

Hearing device 702 may provide prompts to the user to confirm selections of audio rendering modes. For example, hearing device 702 may determine that the user intends to remain in an audio rendering mode that is based entirely on ambient audio content. However, along with such a determination, hearing device 702 may still prompt the user (e.g., via the remote audio source) whether the user wishes to switch audio rendering modes to receive remote audio content. In this way, if hearing device 702 has correctly determined that the user wishes to remain listening to the ambient audio content, the user may not even notice the prompt, and hearing device 702 will continue to seamlessly provide the audio content the user intends to listen to. Additionally or alternatively, hearing device 702 may prompt the user for confirmation on a determination of an intention to switch audio rendering modes. Hearing device 702 may also be configured to learn from inputs received by these prompts to better learn the intentions of the user and the accelerometer and environmental data that corresponds to the intentions.

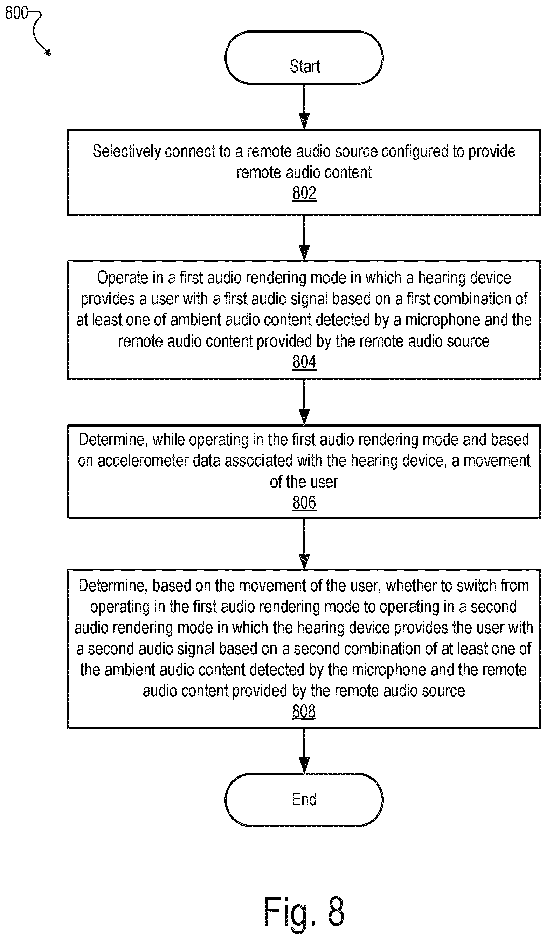

FIG. 8 illustrates an exemplary method 800. One or more of the operations shown in FIG. 8 may be performed by any of the hearing devices described herein. While FIG. 8 illustrates exemplary operations according to one embodiment, other embodiments may omit, add to, reorder, and/or modify any of the operations shown in FIG. 8.

In step 802, a hearing device selectively connects to a remote audio source configured to provide remote audio content. Step 802 may be performed in any of the ways described herein.

In step 804, the hearing device operates in a first audio rendering mode in which the hearing device provides a user with a first audio signal based on a first combination of at least one of ambient audio content detected by a microphone and the remote audio content provided by the remote audio source. Step 804 may be performed in any of the ways described herein.

In step 806, the hearing device determines, while operating in the first audio rendering mode and based on accelerometer data associated with the hearing device, a movement of the user. Step 806 may be performed in any of the ways described herein.

In step 808, the hearing device determines, based on the movement of the user, whether to switch from operating in the first audio rendering mode to operating in a second audio rendering mode in which the hearing device provides the user with a second audio signal based on a second combination of at least one of the ambient audio content detected by the microphone and the remote audio content provided by the remote audio source. Step 808 may be performed in any of the ways described herein.

In the preceding description, various exemplary embodiments have been described with reference to the accompanying drawings. It will, however, be evident that various modifications and changes may be made thereto, and additional embodiments may be implemented, without departing from the scope of the invention as set forth in the claims that follow. For example, certain features of one embodiment described herein may be combined with or substituted for features of another embodiment described herein. The description and drawings are accordingly to be regarded in an illustrative rather than a restrictive sense.

## Claims

1. A hearing device configured to be worn by a user, the hearing device comprising:
a microphone (110, 110-L, 110-R, 604, 704) configured to detect ambient audio content;
an accelerometer (112, 112-L, 112-R, 606, 706) configured to output accelerometer data associated with the hearing device; and
a processor (106, 106-L, 106-R) communicatively coupled to the microphone (110, 110-L, 110-R, 604, 704) and the accelerometer (112, 112-L, 112-R, 606, 706), the processor configured to:
selectively connect to a remote audio source (104) configured to provide remote audio content;
operate in a first audio rendering mode in which the processor (106, 106-L, 106-R) provides the user with a first audio signal based on a first combination of at least one of the ambient audio content detected by the microphone (110, 110-L, 110-R, 604, 704) and the remote audio content provided by the remote audio source (104);
determine, while operating in the first audio rendering mode and based on the accelerometer data, a movement of the user;
determine, based on the movement of the user, whether to switch from operating in the first audio rendering mode to operating in a second audio rendering mode in which the processor (106, 106-L, 106-R) provides the user with a second audio signal based on a second combination of at least one of the ambient audio content detected by the microphone (110, 110-L, 110-R, 604, 704) and the remote audio content provided by the remote audio source (104), wherein the first audio signal is based more on the remote audio content than on the ambient audio content; and
detect, in the ambient audio content, specific content;
**characterized in that** the processor (106, 106-L, 1 06-R) is further configured to
determine a direction of a source of the specific content;
determine that the movement of the user correlates with the direction of the source of the specific content; and
switch, based on the determination that the movement of the user correlates with the direction of the source of the specific content, from operating in the first audio rendering mode to operating in the second audio rendering mode in which the processor (106, 106-L, 106-R) provides the user with the second audio signal, wherein the second audio signal is based more on the ambient audio content than on the remote audio content.

2. The hearing device of claim 1, wherein the processor (106, 106-L, 106-R) is further configured to:
detect, while in the second audio rendering mode and using at least one of the microphone (110, 110-L, 110-R, 604, 704) and another sensor (610) of the hearing device, whether the user is speaking; and
determine, based on the detecting of whether the user is speaking, whether to switch back from operating in the second audio rendering mode to operating in the first audio rendering mode.

3. The hearing device of claim 1 or 2, wherein:
the first audio signal is based entirely on the remote audio content, and
the second audio signal is based entirely on the ambient audio content.

4. The hearing device of claim 3, wherein the processor (106, 106-L, 106-R) is further configured to disconnect, based on the switching from operating in the first audio rendering mode to operating in the second audio rendering mode, from the remote audio source (104).

5. The hearing device of claim 3 or 4, wherein the processor (106, 106-L, 106-R) is further configured to direct, based on the switching from operating in the first audio rendering mode to operating in the second audio rendering mode, the remote audio source (104) to pause the providing of the remote audio content.

6. The hearing device of claim 5, wherein the processor (106, 106-L, 106-R) is further configured to:
detect, while in the second audio rendering mode and using at least one of the microphone (110, 110-L, 110-R, 604, 704) and another sensor (106) of the hearing device, that the user is not speaking for a threshold length of time;
switch, based on the detecting that the user is not speaking for the threshold length of time, back from operating in the second audio rendering mode to operating in the first audio rendering mode; and
direct, based on the switching from operating in the second audio rendering mode to operating in the first audio rendering mode, the remote audio source to resume the providing of the remote audio content.

7. The hearing device of any of claims 1 to 6, wherein:
the processor (106, 106-L, 106-R) is further configured to determine, based on the movement of the user, a walking state of the user; and
the determining whether to switch from operating in the first audio rendering mode to operating in the second audio rendering mode is based on the walking state of the user.

8. The hearing device of claim 7, wherein:
the first audio signal is based more on the ambient audio content than on the remote audio content;
the second audio signal is based more of the remote audio content than on the ambient audio content; and
the processor (106, 106-L, 106-R) is configured to abstain from switching from operating in the first audio rendering mode to operating in the second audio rendering mode if the walking state indicates that the user is taking steps.

9. The hearing device of any of claims 1 to 8, wherein:
the determining whether to switch from operating in the first audio rendering mode to operating in the second audio rendering mode comprises determining that the processor (106, 106-L, 106-R) is to switch from operating in the first audio rendering mode to operating in the second audio rendering mode; and
the processor (106, 106-L, 106-R) is further configured to provide, based on the determining that the processor is to switch from operating in the first audio rendering mode to operating in the second audio rendering mode, the user with a prompt to confirm the determination to switch from operating in the first audio rendering mode to operating in the second audio rendering mode.

10. The hearing device of any of claims 1 to 9, wherein the processor is further configured to:
determine one or more acoustic environment classifications of the user while operating in the first audio rendering mode, and
wherein the determining whether to switch from operating in the first audio rendering mode to operating in the second audio rendering mode is additionally based on the one or more acoustic environment classifications.

11. A hearing system comprising:
a first hearing device (102-L, 102-R) configured for a first ear of a user, the first hearing device comprising a first microphone (110, 110-L, 110-R, 604, 704) configured to detect ambient audio content;
a second hearing device (102-L, 102-R) configured for a second ear of the user, the second hearing device comprising a second microphone (110, 110-L, 110-R, 604, 704) configured to detect the ambient audio content;
an accelerometer (112, 112-L, 112-R, 606, 706) configured to output accelerometer data associated with at least one of the first hearing device and the second hearing device; and
a processor (106, 106-L, 106-R) communicatively coupled to the first hearing device, the second hearing device, and the accelerometer, the processor configured to:
selectively connect to a remote audio source (104) configured to provide remote audio content;
operate in a first audio rendering mode in which the processor (106, 106-L, 106-R) provides the user with a first audio signal based on a first combination of at least one of the ambient audio content and the remote audio content provided by the remote audio source (104), wherein the first audio signal is based more on the remote audio content than on the ambient audio content;
detect, in the ambient audio content, specific content;
determine, while operating in the first audio rendering mode and based on the accelerometer data, a movement of the user; and
determine, based on the movement of the user, whether to switch from operating in the first audio rendering mode to operating in a second audio rendering mode in which the processor provides the user with a second audio signal based on a second combination of at least one of the ambient audio content and the remote audio content provided by the remote audio source,
**characterized in that** the processor (106, 106-L, 1 06-R) is further configured to:
determine a direction of a source of the specific content;
determine that the movement of the user correlates with the direction of the source of the specific content; and
switch, based on the determination that the movement of the user correlates with the direction of the source of the specific content, from operating in the first audio rendering mode to operating in the second audio rendering mode in which the processor (106, 106-L, 106-R) provides the user with the second audio signal, wherein the second audio signal is based more on the ambient audio content than on the remote audio content.

12. The hearing system of claim 11, wherein the determining of the direction of the source of the specific content comprises:
determining a first signal-to-noise ratio of the specific content detected by the first microphone (110, 110-L, 110-R, 604, 704);
determining a second signal-to-noise ratio of the specific content detected by the second microphone (110, 110-L, 110-R, 604, 704); and
comparing the first signal-to-noise ratio and the second signal-to-noise ratio.

13. The hearing system of claim 11 or 12, wherein the processor (106, 106-L, 106-R) is further configured to:
operate, based on the determination of whether to switch from operating in the first audio rendering mode to operating in a second audio rendering mode, the first hearing device in the first audio rendering mode and the second hearing device in the second audio rendering mode.

14. A method comprising:
selectively connecting, by a hearing device, to a remote audio source (104) configured to provide remote audio content;
operating, by the hearing device, in a first audio rendering mode in which the hearing device provides a user of the hearing device with a first audio signal based on a first combination of at least one of ambient audio content detected by a microphone (110, 110-L, 110-R, 604, 704) of the hearing device and the remote audio content provided by the remote audio source (104);
determining, by the hearing device, while operating in the first audio rendering mode and based on accelerometer data from an accelerometer (112, 112-L, 112-R, 606, 706), a movement of the user;
determining, by the hearing device and based on the movement of the user, whether to switch from operating in the first audio rendering mode to operating in a second audio rendering mode in which the hearing device provides the user with a second audio signal based on a second combination of at least one of the ambient audio content detected by the microphone (110, 110-L, 110-R, 604, 704) and the remote audio content provided by the remote audio source (104), wherein the first audio signal is based more on the remote audio content than on the ambient audio content; and
detecting, in the ambient audio content, specific content; **characterized by** determining a direction of a source of the specific content;
determining that the movement of the user correlates with the direction of the source of the specific content; and
switching, based on the determination that the movement of the user correlates with the direction of the source of the specific content, from operating in the first audio rendering mode to operating in the second audio rendering mode in which the processor (106, 106-L, 106-R) provides the user with the second audio signal, wherein the second audio signal is based more on the ambient audio content than on the remote audio content.

## Patentansprüche

1. Hörgerät, das konfiguriert ist, durch einen Benutzer getragen zu werden, das Hörgerät umfassend:
ein Mikrofon (110, 110-L, 110-R, 604, 704), das konfiguriert ist, umgebenden Audioinhalt zu detektieren;
einen Beschleunigungsmesser (112, 112-L, 112-R, 606, 706), der konfiguriert ist, Beschleunigungsmesserdaten auszugeben, die mit dem Hörgerät assoziiert sind; und
einen Prozessor (106, 106-L, 106-R), der an das Mikrofon (110, 110-L, 110-R, 604, 704) und den Beschleunigungsmesser (112, 112-L, 112-R, 606, 706) kommunikativ gekoppelt ist, der Prozessor konfiguriert zum:
selektiven Verbinden mit einer entfernten Audioquelle (104), die zum Bereitstellen von entferntem Audioinhalt konfiguriert ist;
Betriebenwerden in einem ersten Audiowiedergabemodus, in dem der Prozessor (106, 106-L, 106-R) den Benutzer mit einem ersten Audiosignal basierend auf einer ersten Kombination mindestens eines des umgebenden Audioinhalts, der durch das Mikrofon (110, 110-L, 110-R, 604, 704) detektiert wird, und des entfernten Audioinhalts, der durch die entfernte Audioquelle (104) bereitgestellt wird, versieht;
Bestimmen, während des Betriebs in dem ersten Audiowiedergabemodus und basierend auf den Beschleunigungsmesserdaten, einer Bewegung des Benutzers;
Bestimmen, basierend auf der Bewegung des Benutzers, ob von Betrieb in dem ersten Audiowiedergabemodus zu Betrieb in einem zweiten Audiowiedergabemodus umgeschaltet werden soll, in dem der Prozessor (106, 106-L, 106-R) den Benutzer mit einem zweiten Audiosignal basierend auf einer zweiten Kombination mindestens eines des umgebenden Audioinhalts, der durch das Mikrofon (110, 110-L, 110-R, 604, 704) detektiert wird, und des entfernten Audioinhalts, der durch die entfernte Audioquelle (104) bereitgestellt wird, versieht, wobei das erste Audiosignal mehr auf dem entfernten Audioinhalt als auf dem umgebenden Audioinhalt basiert ist; und
Detektieren, in dem umgebenden Audioinhalt, von spezifischem Inhalt;
**dadurch gekennzeichnet, dass** der Prozessor (106, 106-L, 106-R) ferner konfiguriert ist zum
Bestimmen einer Richtung einer Quelle des spezifischen Inhalts;
Bestimmen, dass die Bewegung des Benutzers mit der Richtung der Quelle des spezifischen Inhalts korreliert; und
Umschalten, basierend auf der Bestimmung, dass die Bewegung des Benutzers mit der Richtung der Quelle des spezifischen Inhalts korreliert, von Betrieb in dem ersten Audiowiedergabemodus zu Betrieb in dem zweiten Audiowiedergabemodus, in dem der Prozessor (106, 106-L, 106-R) den Benutzer mit dem zweiten Audiosignal versieht, wobei das zweite Audiosignal mehr auf dem umgebenden Audioinhalt als auf dem entfernte Audioinhalt basiert ist.

2. Hörgerät nach Anspruch 1, wobei der Prozessor (106, 106-L, 106-R) ferner konfiguriert ist zum:
Detektieren, in dem zweiten Audiowiedergabemodus und unter Verwendung mindestens eines des Mikrofons (110, 110-L, 110-R, 604, 704) und eines anderen Sensors (610) des Hörgeräts, ob der Benutzer spricht; und
Bestimmen, basierend auf dem Detektieren, ob der Benutzer spricht, ob von Betrieb in dem zweiten Audiowiedergabemodus zurück zu Betrieb in dem ersten Audiowiedergabemodus umgeschaltet werden soll.

3. Hörgerät nach Anspruch 1 oder 2, wobei:
der erste Audiosignal vollständig auf dem entfernten Audioinhalt basiert und
das zweite Audiosignal vollständig auf dem umgebenden Audioinhalt basiert.

4. Hörgerät nach Anspruch 3, wobei der Prozessor (106, 106-L, 106-R) ferner konfiguriert ist zum Abtrennen, basierend auf dem Umschalten von Betrieb in dem ersten Audiowiedergabemodus zu Betrieb in dem zweiten Audiowiedergabemodus, von der entfernten Audioquelle (104) .

5. Hörgerät nach Anspruch 3 oder 4, wobei der Prozessor (106, 106-L, 106-R) ferner konfiguriert ist zum Anweisen, basierend auf dem Umschalten von Betrieb in dem ersten Audiowiedergabemodus zu Betrieb in dem zweiten Audiowiedergabemodus, der entfernten Audioquelle (104), das Bereitstellen des entfernten Audioinhalts zu pausieren.

6. Hörgerät nach Anspruch 5, wobei der Prozessor (106, 106-L, 106-R) ferner konfiguriert ist zum:
Detektieren, in dem zweiten Audiowiedergabemodus und unter Verwendung mindestens eines des Mikrofons (110, 110-L, 110-R, 604, 704) und eines anderen Sensors (106) des Hörgeräts, dass die Benutzer eine Schwellenwert-Zeitdauer nicht spricht;
Umschalten, basierend auf dem Detektieren, dass der Benutzer die Schwellenwert-Zeitdauer nicht spricht, von Betrieb in dem zweiten Audiowiedergabemodus zurück zu Betrieb in dem ersten Audiowiedergabemodus; und
Anweisen, basierend auf dem Umschalten von Betrieb in dem zweiten Audiowiedergabemodus zu Betrieb in dem ersten Audiowiedergabemodus, der entfernten Audioquelle, das Bereitstellen des entfernten Audioinhalts wieder aufzunehmen.

7. Hörgerät nach einem der Ansprüche 1 bis 6, wobei:
der Prozessor (106, 106-L, 106-R) ferner konfiguriert ist zum Bestimmen, basierend auf der Bewegung des Benutzers, eines Laufzustands des Benutzers; und
das Bestimmen, ob von Betrieb in dem ersten Audiowiedergabemodus zu Betrieb in dem zweiten Audiowiedergabemodus umgeschaltet werden soll, auf dem Laufzustand des Benutzers basiert ist.

8. Hörgerät nach Anspruch 7, wobei:
das erste Audiosignal mehr auf dem umgebenden Audioinhalt als auf dem entfernten Audioinhalt basiert ist;
das zweite Audiosignal mehr auf dem entfernten Audioinhalt als auf dem umgebenden Audioinhalt basiert ist; und
der Prozessor (106, 106-L, 106-R) konfiguriert ist zum Unterlassen von Umschalten von Betrieb in dem ersten Audiowiedergabemodus zu Betrieb in dem zweiten Audiowiedergabemodus, wenn der Laufzustand angibt, dass die Benutzer Schritte macht.

9. Hörgerät nach einem der Ansprüche 1 bis 8, wobei:
das Bestimmen, ob von Betrieb in dem ersten Audiowiedergabemodus zu Betrieb in dem zweiten Audiowiedergabemodus umgeschaltet werden soll, umfasst, zu bestimmen, dass der Prozessor (106, 106-L, 106-R) von Betrieb in dem ersten Audiowiedergabemodus zu Betrieb in dem zweiten Audiowiedergabemodus umschalten soll; und
der Prozessor (106, 106-L, 106-R) ferner konfiguriert ist, basierend auf dem Bestimmen, dass der Prozessor von Betrieb in dem ersten Audiowiedergabemodus zu Betrieb in dem zweiten Audiowiedergabemodus umschalten soll, dem Benutzer eine Aufforderung bereitzustellen, die Bestimmung, von Betrieb in dem ersten Audiowiedergabemodus zu Betrieb in dem zweiten Audiowiedergabemodus umzuschalten, zu bestätigen.

10. Hörgerät nach einem der Ansprüche 1 bis 9, wobei der Prozessor ferner konfiguriert ist zum:
Bestimmen einer oder mehrerer Umgebungsklassifizierungen des Benutzers während des Betriebs in dem ersten Audiowiedergabemodus und
wobei das Bestimmen, ob von Betrieb in dem ersten Audiowiedergabemodus zu Betrieb in dem zweiten Audiowiedergabemodus umgeschaltet werden soll, zusätzlich auf der einen oder den mehreren Umgebungsklassifizierungen basiert ist.

11. Hörsystem, umfassend:
ein erstes Hörgerät (102-L, 102-R), konfiguriert für ein erstes Ohr eines Benutzers, das erste Hörgerät umfassend ein erstes Mikrofon (110, 110-L, 110-R, 604, 704), das konfiguriert ist, umgebenden Audioinhalt zu detektieren;
ein zweites Hörgerät (102-L, 102-R), konfiguriert für ein zweiten Ohr des Benutzers, das zweite Hörgerät umfassend ein zweites Mikrofon (110, 110-L, 110-R, 604, 704), das konfiguriert ist, den umgebenden Audioinhalt zu detektieren;
einen Beschleunigungsmesser (112, 112-L, 112-R, 606, 706), der konfiguriert ist, Beschleunigungsmesserdaten, die mit mindestens einem des ersten Hörgeräts und des zweiten Hörgeräts assoziiert sind, auszugeben; und
einen Prozessor (106, 106-L, 106-R), der an das erste Hörgerät, das zweite Hörgerät und den Beschleunigungsmesser kommunikativ gekoppelt ist, der Prozessor konfiguriert zum:
selektiven Verbinden mit einer entfernten Audioquelle (104), die zum Bereitstellen von entferntem Audioinhalt konfiguriert ist;
Betriebenwerden in einem ersten Audiowiedergabemodus, in dem der Prozessor (106, 106-L, 106-R) den Benutzer mit einem ersten Audiosignal basierend auf einer ersten Kombination mindestens eines des umgebenden Audioinhalts und des entfernten Audioinhalts, der durch die entfernte Audioquelle (104) bereitgestellt wird, versieht, wobei das erste Audiosignal mehr auf dem entfernten Audioinhalt als auf dem umgebenden Audioinhalt basiert ist;
Detektieren, in dem umgebenden Audioinhalt, von spezifischem Inhalt;
Bestimmen, während des Betriebs in dem ersten Audiowiedergabemodus und basierend auf den Beschleunigungsmesserdaten, einer Bewegung des Benutzers; und
Bestimmen, basierend auf der Bewegung des Benutzers, ob von Betrieb in dem ersten Audiowiedergabemodus zu Betrieb in einem zweiten Audiowiedergabemodus umgeschaltet werden soll, in dem der Prozessor den Benutzer mit einem zweiten Audiosignal basierend auf einer zweiten Kombination mindestens eines des umgebenden Audioinhalts und des entfernten Audioinhalts, der durch die entfernten Audioquelle bereitgestellt wird, versieht,
**dadurch gekennzeichnet, dass** der Prozessor (106, 106-L, 106-R) ferner konfiguriert ist zum:
Bestimmen einer Richtung einer Quelle des spezifischen Inhalts;
Bestimmen, dass die Bewegung des Benutzers mit der Richtung der Quelle des spezifischen Inhalts korreliert; und
Umschalten, basierend auf der Bestimmung, dass die Bewegung des Benutzers mit der Richtung der Quelle des spezifischen Inhalts korreliert, von Betrieb in dem ersten Audiowiedergabemodus zu Betrieb in dem zweiten Audiowiedergabemodus, in dem der Prozessor (106, 106-L, 106-R) den Benutzer mit dem zweiten Audiosignal versieht, wobei das zweite Audiosignal mehr auf dem umgebenden Audioinhalt als auf dem entfernten Audioinhalt basiert ist.

12. Hörsystem nach Anspruch 11, wobei das Bestimmen der Richtung der Quelle des spezifischen Inhalts umfasst:
Bestimmen eines ersten Signal-Rausch-Abstands des spezifischen Inhalts, der durch das erste Mikrofon (110, 110-L, 110-R, 604, 704) detektiert wird;
Bestimmen eines zweiten Signal-Rausch-Abstands des spezifischen Inhalts, der durch das zweite Mikrofon (110, 110-L, 110-R, 604, 704) detektiert wird; und
Vergleichen des ersten Signal-Rausch-Abstands und des zweiten Signal-Rausch-Abstands.

13. Hörsystem nach Anspruch 11 oder 12, wobei der Prozessor (106, 106-L, 106-R) ferner konfiguriert ist zum:
Betreiben, basierend auf der Bestimmung, ob von Betrieb in dem ersten Audiowiedergabemodus zu Betrieb in einem zweiten Audiowiedergabemodus umgeschaltet werden soll, des ersten Hörgeräts in dem ersten Audiowiedergabemodus und des zweiten Hörgeräts in dem zweiten Audiowiedergabemodus.

14. Verfahren, umfassend:
selektives Verbinden, durch ein Hörgerät, mit einer entfernten Audioquelle (104), die zum Bereitstellen von entferntem Audioinhalt konfiguriert ist;
Betrieb, durch das Hörgerät, in einem ersten Audiowiedergabemodus, in dem das Hörgerät einen Benutzer des Hörgeräts mit einem ersten Audiosignal basierend auf einer ersten Kombination mindestens eines von umgebendem Audioinhalt, der durch ein Mikrofon (110, 110-L, 110-R, 604, 704) des Hörgeräts detektiert wird, und des entfernten Audioinhalts, der durch die entfernte Audioquelle (104) bereitgestellt wird, versieht;
Bestimmen, durch das Hörgerät, während des Betriebs in dem ersten Audiowiedergabemodus und basierend auf Beschleunigungsmesserdaten von einem Beschleunigungsmesser (112, 112-L, 112-R, 606, 706), einer Bewegung des Benutzers;
Bestimmen, durch das Hörgerät und basierend auf der Bewegung des Benutzers, ob von Betrieb in dem ersten Audiowiedergabemodus zu Betrieb in einem zweiten Audiowiedergabemodus umgeschaltet werden soll, in dem das Hörgerät den Benutzer mit einem zweiten Audiosignal basierend auf einer zweiten Kombination mindestens eines des umgebenden Audioinhalts, der durch das Mikrofon (110, 110-L, 110-R, 604, 704) detektiert wird, und des entfernten Audioinhalts, der durch die entfernte Audioquelle (104) bereitgestellt wird, versieht, wobei das erste Audiosignal mehr auf dem entfernten Audioinhalt als auf dem umgebenden Audioinhalt basiert ist; und
Detektieren, in dem umgebenden Audioinhalt, von spezifischem Inhalt; **gekennzeichnet durch**
Bestimmen einer Richtung einer Quelle des spezifischen Inhalts;
Bestimmen, dass die Bewegung des Benutzers mit der Richtung der Quelle des spezifischen Inhalts korreliert; und
Umschalten, basierend auf der Bestimmung, dass die Bewegung des Benutzers mit der Richtung der Quelle des spezifischen Inhalts korreliert, von Betrieb in dem ersten Audiowiedergabemodus zu Betrieb in dem zweiten Audiowiedergabemodus, in dem der Prozessor (106, 106-L, 106-R) den Benutzer mit dem zweiten Audiosignal versieht, wobei das zweite Audiosignal mehr auf dem umgebenden Audioinhalt als auf dem entfernten Audioinhalt basiert ist.

## Revendications

1. Dispositif auditif configuré pour être porté par un utilisateur, le dispositif auditif comprenant :
un microphone (110, 110-L, 110-R, 604, 704) configuré pour détecter un contenu audio ambiant ;
un accéléromètre (112, 112-L, 112-R, 606, 706) configuré pour émettre en sortie des données d'accéléromètre associées au dispositif auditif ; et
un processeur (106, 106-L, 106-R) couplé en communication au microphone (110, 110-L, 110-R, 604, 704) et à l'accéléromètre (112, 112-L, 112-R, 606, 706), le processeur étant configuré pour :
être connecté sélectivement à une source audio à distance (104) configurée pour fournir un contenu audio à distance ;
fonctionner dans un premier mode de restitution audio dans lequel le processeur (106, 106-L, 106-R) fournit à l'utilisateur un premier signal audio sur la base d'une première combinaison d'au moins un contenu parmi le contenu audio ambiant détecté par le microphone (110, 110-L, 110-R, 604, 704) et le contenu audio à distance fourni par la source audio à distance (104) ;
déterminer, pendant le fonctionnement dans le premier mode de restitution audio et sur la base des données d'accéléromètre, un déplacement de l'utilisateur ;
déterminer, sur la base du déplacement de l'utilisateur, s'il convient ou non de commuter le fonctionnement dans le premier mode de restitution audio sur le fonctionnement dans un second mode de restitution audio dans lequel le processeur (106, 106-L, 106-R) fournit à l'utilisateur un second signal audio sur la base d'une seconde combinaison d'au moins un contenu parmi le contenu audio ambiant détecté par le microphone (110, 110-L, 110-R, 604, 704) et le contenu audio à distance fourni par la source audio à distance (104), dans lequel le premier signal audio est basé davantage sur le contenu audio à distance que sur le contenu audio ambiant ; et
détecter, dans le contenu audio ambiant, un contenu spécifique ;
**caractérisé en ce que** le processeur (106, 106-L, 106-R) est en outre configuré pour :
déterminer une direction d'une source du contenu spécifique ;
déterminer que le déplacement de l'utilisateur est corrélé à la direction de la source du contenu spécifique ; et
commuter, sur la base de la détermination du fait que le déplacement de l'utilisateur est corrélé à la direction de la source du contenu spécifique, le fonctionnement dans le premier mode de restitution audio sur le fonctionnement dans le second mode de restitution audio dans lequel le processeur (106, 106-L, 106-R) fournit à l'utilisateur le second signal audio, dans lequel le second signal audio est basé davantage sur le contenu audio ambiant que sur le contenu audio à distance.

2. Dispositif auditif selon la revendication 1, dans lequel le processeur (106, 106-L, 106-R) est en outre configuré pour :
détecter, pendant le second mode de restitution audio et en utilisant au moins un composant parmi le microphone (110, 110-L, 110-R, 604, 704) et un autre capteur (610) du dispositif auditif, si l'utilisateur est ou non en train de parler ; et
déterminer, sur la base de la détection de si l'utilisateur est ou non en train de parler, s'il convient ou non de rétro-commuter le fonctionnement dans le second mode de restitution audio sur le fonctionnement dans le premier mode de restitution audio.

3. Dispositif auditif selon la revendication 1 ou 2, dans lequel :
le premier signal audio est basé en totalité sur le contenu audio à distance, et le second signal audio est basé en totalité sur le contenu audio ambiant.

4. Dispositif auditif selon la revendication 3, dans lequel le processeur (106, 106-L, 106-R) est en outre configuré pour être déconnecté, sur la base de la commutation du fonctionnement dans le premier mode de restitution audio sur le fonctionnement dans le second mode de restitution audio, de la source audio à distance (104) .

5. Dispositif auditif selon la revendication 3 ou 4, dans lequel le processeur (106, 106-L, 106-R) est en outre configuré pour diriger, sur la base de la commutation du fonctionnement dans le premier mode de restitution audio sur le fonctionnement dans le second mode de restitution audio, la source audio à distance (104) pour qu'elle fasse une pause dans la fourniture du contenu audio à distance.

6. Dispositif auditif selon la revendication 5, dans lequel le processeur (106, 106-L, 106-R) est en outre configuré pour :
détecter, pendant le second mode de restitution audio et en utilisant au moins un composant parmi le microphone (110, 110-L, 110-R, 604, 704) et un autre capteur (106) du dispositif auditif, que l'utilisateur n'est pas en train de parler pendant une durée temporelle de seuil ;
rétro-commuter, sur la base de la détection du fait que l'utilisateur n'est pas en train de parler pendant la durée temporelle de seuil, le fonctionnement dans le second mode de restitution audio sur le fonctionnement dans le premier mode de restitution audio ; et
diriger, sur la base de la commutation du fonctionnement dans le second mode de restitution audio sur le fonctionnement dans le premier mode de restitution audio, la source audio à distance pour qu'elle reprenne la fourniture du contenu audio à distance.

7. Dispositif auditif selon l'une quelconque des revendications 1 à 6, dans lequel :
le processeur (106, 106-L, 106-R) est en outre configuré pour déterminer, sur la base du déplacement de l'utilisateur, un état de marche de l'utilisateur ; et
la détermination de s'il convient ou non de commuter le fonctionnement dans le premier mode de restitution audio sur le fonctionnement dans le second mode de restitution audio est basée sur l'état de marche de l'utilisateur.

8. Dispositif auditif selon la revendication 7, dans lequel :
le premier signal audio est basé davantage sur le contenu audio ambiant que sur le contenu audio à distance ;
le second signal audio est basé davantage sur le contenu audio à distance que sur le contenu audio ambiant ; et
le processeur (106, 106-L, 106-R) est configuré pour s'abstenir de commuter le fonctionnement dans le premier mode de restitution audio sur le fonctionnement dans le second mode de restitution audio si l'état de marche indique que l'utilisateur fait des pas.

9. Dispositif auditif selon l'une quelconque des revendications 1 à 8, dans lequel :
la détermination de s'il convient ou non de commuter le fonctionnement dans le premier mode de restitution audio sur le fonctionnement dans le second mode de restitution audio comprend la détermination du fait que le processeur (106, 106-L, 106-R) doit commuter le fonctionnement dans le premier mode de restitution audio sur le fonctionnement dans le second mode de restitution audio ; et
le processeur (106, 106-L, 106-R) est en outre configuré pour fournir, sur la base de la détermination du fait que le processeur doit commuter le fonctionnement dans le premier mode de restitution audio sur le fonctionnement dans le second mode de restitution audio, à l'utilisateur une demande de confirmation de la détermination de la commutation du fonctionnement dans le premier mode de restitution audio sur le fonctionnement dans le second mode de restitution audio.

10. Dispositif auditif selon l'une quelconque des revendications 1 à 9, dans lequel le processeur est en outre configuré pour :
déterminer une ou plusieurs classifications d'environnement acoustique de l'utilisateur pendant le fonctionnement dans le premier mode de restitution audio ; et
dans lequel la détermination de s'il convient ou non de commuter le fonctionnement dans le premier mode de restitution audio sur le fonctionnement dans le second mode de restitution audio est de façon additionnelle basée sur les une ou plusieurs classifications d'environnement acoustique.

11. Système auditif comprenant :
un premier dispositif auditif (102-L, 102-R) configuré pour une première oreille d'un utilisateur, le premier dispositif auditif comprenant un premier microphone (110, 110-L, 110-R, 604, 704) configuré pour détecter un contenu audio ambiant ;
un second dispositif auditif (102-L, 102-R) configuré pour une seconde oreille de l'utilisateur, le second dispositif auditif comprenant un second microphone (110, 110-L, 110-R, 604, 704) configuré pour détecter le contenu audio ambiant ;
un accéléromètre (112, 112-L, 112-R, 606, 706) configuré pour émettre en sortie des données d'accéléromètre associées à au moins un dispositif parmi le premier dispositif auditif et le second dispositif auditif ; et
un processeur (106, 106-L, 106-R) couplé en communication au premier dispositif auditif, au second dispositif auditif et à l'accéléromètre, le processeur étant configuré pour :
être connecté sélectivement à une source audio à distance (104) configurée pour fournir un contenu audio à distance ;
fonctionner dans un premier mode de restitution audio dans lequel le processeur (106, 106-L, 106-R) fournit à l'utilisateur un premier signal audio sur la base d'une première combinaison d'au moins un contenu parmi le contenu audio ambiant et le contenu audio à distance fourni par la source audio à distance (104), dans lequel le premier signal audio est basé davantage sur le contenu audio à distance que sur le contenu audio ambiant ;
détecter, dans le contenu audio ambiant, un contenu spécifique ;
déterminer, pendant le fonctionnement dans le premier mode de restitution audio et sur la base des données d'accéléromètre, un déplacement de l'utilisateur ; et
déterminer, sur la base du déplacement de l'utilisateur, s'il convient ou non de commuter le fonctionnement dans le premier mode de restitution audio sur le fonctionnement dans un second mode de restitution audio dans lequel le processeur fournit à l'utilisateur un second signal audio sur la base d'une seconde combinaison d'au moins un contenu parmi le contenu audio ambiant et le contenu audio à distance fourni par la source audio à distance,
**caractérisé en ce que** le processeur (106, 106-L, 106-R) est en outre configuré pour :
déterminer une direction d'une source du contenu spécifique ;
déterminer que le déplacement de l'utilisateur est corrélé à la direction de la source du contenu spécifique ; et
commuter, sur la base de la détermination du fait que le déplacement de l'utilisateur est corrélé à la direction de la source du contenu spécifique, le fonctionnement dans le premier mode de restitution audio sur le fonctionnement dans le second mode de restitution audio dans lequel le processeur (106, 106-L, 106-R) fournit à l'utilisateur le second signal audio, dans lequel le second signal audio est basé davantage sur le contenu audio ambiant que sur le contenu audio à distance.

12. Système auditif selon la revendication 11, dans lequel la détermination de la direction de la source du contenu spécifique comprend :
la détermination d'un premier rapport signal sur bruit du contenu spécifique détecté par le premier microphone (110, 110-L, 110-R, 604, 704) ;
la détermination d'un second rapport signal sur bruit du contenu spécifique détecté par le second microphone (110, 110-L, 110-R, 604, 704) ; et
la comparaison du premier rapport signal sur bruit et du second rapport signal sur bruit.

13. Système auditif selon la revendication 11 ou 12, dans lequel le processeur (106, 106-L, 106-R) est en outre configuré pour :
faire fonctionner, sur la base de la détermination de s'il convient ou non de commuter le fonctionnement dans le premier mode de restitution audio sur le fonctionnement dans un second mode de restitution audio, le premier dispositif auditif dans le premier mode de restitution audio et le second dispositif auditif dans le second mode de restitution audio.

14. Procédé comprenant :
la connexion sélective, par un dispositif auditif, sur une source audio à distance (104) configurée pour fournir un contenu audio à distance ;
le fonctionnement, par le dispositif auditif, dans un premier mode de restitution audio dans lequel le dispositif auditif fournit à un utilisateur du dispositif auditif un premier signal audio sur la base d'une première combinaison d'au moins un contenu parmi un contenu audio ambiant détecté par un microphone (110, 110-L, 110-R, 604, 704) du dispositif auditif et le contenu audio à distance fourni par la source audio à distance (104) ;
la détermination, par le dispositif auditif, pendant le fonctionnement dans le premier mode de restitution audio et sur la base de données d'accéléromètre en provenance d'un accéléromètre (112, 112-L, 112-R, 606, 706), d'un déplacement de l'utilisateur ;
la détermination, par le dispositif auditif et sur la base du déplacement de l'utilisateur, de s'il convient ou non de commuter le fonctionnement dans le premier mode de restitution audio sur le fonctionnement dans un second mode de restitution audio dans lequel le dispositif auditif fournit à l'utilisateur un second signal audio sur la base d'une seconde combinaison d'au moins un contenu parmi le contenu audio ambiant détecté par le microphone (110, 110-L, 110-R, 604, 704) et le contenu audio à distance fourni par la source audio à distance (104), dans lequel le premier signal audio est basé davantage sur le contenu audio à distance que sur le contenu audio ambiant ; et
la détection, dans le contenu audio ambiant, d'un contenu spécifique ; **caractérisé par**
la détermination d'une direction d'une source du contenu spécifique ;
la détermination du fait que le déplacement de l'utilisateur est corrélé à la direction de la source du contenu spécifique ; et
la commutation, sur la base de la détermination du fait que le déplacement de l'utilisateur est corrélé à la direction de la source du contenu spécifique, du fonctionnement dans le premier mode de restitution audio sur le fonctionnement dans le second mode de restitution audio dans lequel le processeur (106, 106-L, 106-R) fournit à l'utilisateur le second signal audio, dans lequel le second signal audio est basé davantage sur le contenu audio ambiant que sur le contenu audio à distance.
